(19) Europäisches Patentamt
European Patent Office
Office européen des brevets

(11) EP 3 418 334 A1

(12) # EUROPEAN PATENT APPLICATION
published in accordance with Art. 153(4) EPC

(43) Date of publication:
**26.12.2018 Bulletin 2018/52**

(21) Application number: **17753341.1**

(22) Date of filing: **17.02.2017**

(51) Int Cl.:
***C09C 1/44*** *(2006.01)* ***C01B 32/05*** *(2017.01)*

(86) International application number:
**PCT/JP2017/005999**

(87) International publication number:
**WO 2017/142087 (24.08.2017 Gazette 2017/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.02.2016 JP 2016029267**

(71) Applicants:
- **Sekisui Chemical Co., Ltd.**
  **Osaka-shi, Osaka 530-0047 (JP)**
- **National University Corporation Kumamoto University**
  **Kumamoto-shi, Kumamoto 860-8555 (JP)**

(72) Inventors:
- **SUN, Ren-de**
  **Mishima-gun**
  **Osaka 618-0021 (JP)**
- **NOZATO, Shoji**
  **Mishima-gun**
  **Osaka 618-0021 (JP)**
- **NAKASUGA, Akira**
  **Mishima-gun**
  **Osaka 618-0021 (JP)**
- **IHARA, Hirotaka**
  **Kumamoto-shi**
  **Kumamoto 860-8555 (JP)**
- **TAKAFUJI, Makoto**
  **Kumamoto-shi**
  **Kumamoto 860-8555 (JP)**
- **KUWAHARA, Yutaka**
  **Kumamoto-shi**
  **Kumamoto 860-8555 (JP)**
- **MURAKAMI, Akiko**
  **Kumamoto-shi**
  **Kumamoto 860-8555 (JP)**

(74) Representative: **Cabinet Beau de Loménie**
**158, rue de l'Université**
**75340 Paris Cedex 07 (FR)**

(54) **BLACK PARTICLES AND PROCESS FOR PRODUCING BLACK PARTICLES**

(57) The present invention provides black particles having high electrical insulation properties, high blackness in a visible light region, and excellent dispersibility, and a method for producing the black particles. The present invention relates to black particles containing amorphous carbon, the amorphous carbon being derived from carbon contained in an oxazine resin, the black particles having a specific gravity of 1.8 $g/cm^3$ or less, a zeta potential of -70 to +80 mV, an average total light reflectance measured at a wavelength of 400 to 800 nm of 5% or less, and a peak intensity ratio between G band and D band as determined from a Raman spectrum of 1.2 or more.

EP 3 418 334 A1

## Description

TECHNICAL FIELD

The present invention relates to black particles having high electrical insulation properties, high blackness in a visible light region, and excellent dispersibility, and a method for producing the black particles.

BACKGROUND ART

Black particles such as carbon black are widely used as pigments, filler, weather resistance improvers, and the like. Such carbon particles are also used as pigments for black matrix for liquid crystal color display devices. For example, Patent Literature 1 discloses a carbon black pigment prepared by covering a carbon black pigment having a specific oxygen content with a resin film having high insulation properties to improve the electrical resistivity. Patent Literature 2 discloses a method for forming an insulating black matrix, wherein an insulating carbon black pigment having a surface treated with an organic substance or a carbon black pigment coated with a resin to have improved electrical resistivity is used.
However, carbon black pigments are originally conductive, and therefore cannot easily exhibit insulation properties sufficiently even with resin coating. These carbon particles disadvantageously have insufficient shielding properties against visible light, though they are considered to have a high light-shielding rate.
Moreover, in the case of using carbon particles as a colorant such as resin colorants, printing ink, and coating compositions, the carbon particles are desired to have excellent dispersibility and coloring properties.
For improving the coloring properties of carbon particles, the particle size thereof has been recently increased. However, carbon particles with a large particle size tend to settle in the case of being added to a vehicle or resin used for preparing an ink or coating composition. As a result, the dispersibility or flowability thereof is disadvantageously lowered.
Black particles having less variation in the particle size and high monodispersibility are usable for an electrophoresis-type display element used in electronic paper or the like. Conventional carbon particles such as carbon black, however, have insufficient monodispersibility and are thus likely to aggregate.

CITATION LIST

- Patent Literature

Patent Literature 1: JP 3543501 B
Patent Literature 2: JP 4338479 B

SUMMARY OF INVENTION

- Technical Problem

The present invention aims to, in consideration of the state of the art, provide black particles having high electrical insulation properties, high blackness in a visible light region, and excellent dispersibility, and a method for producing the black particles.

- Solution to problem

The present invention relates to black particles containing amorphous carbon, the amorphous carbon being derived from carbon contained in an oxazine resin, the black particles having a specific gravity of 1.8 g/cm$^3$ or less, a zeta potential of -70 to +80 mV, an average total light reflectance measured at a wavelength of 400 to 800 nm of 5% or less, and a peak intensity ratio between G band and D band as determined from a Raman spectrum of 1.2 or more.
The present invention is specifically described in the following.
The present inventors made intensive studies to find out that black particles containing carbon derived from a predetermined resin and having a specific gravity, a zeta potential, an average total light reflectance at a wavelength of 400 to 800 nm, and a peak intensity ratio between G band and D band each within a predetermined range have high electrical insulation properties, high blackness in a visible light region, and excellent dispersibility. Thus, the present invention was completed.

The black particles of the present invention contain amorphous carbon.

Presence of amorphous carbon in the black particles not only allows production of the black particles at a lower cost due to the ease of production but also provides the black particles with higher sphericity and dispersibility than those of conventional carbon-based black particles. Such black particles are therefore usable as a high-performance black pigment.

The amorphous carbon constituting the black particles of the present invention has an amorphous structure with both sp2 and sp3 bonds, and is made of carbon. The amorphous carbon has a peak intensity ratio between G band and D band of 1.2 or more as determined from a Raman spectrum.

When the amorphous carbon is analyzed by Raman spectroscopy, two peaks are clearly observed: G band (around 1580 $cm^{-1}$) corresponding to the sp2 bond and D band (around 1360 $cm^{-1}$) corresponding to the sp3 bond. As for crystalline carbon materials, either one of the two bands is minimized. For example, monocrystalline diamond hardly shows G band around 1580 $cm^{-1}$, whereas high-purity graphite structures hardly show D band around 1360 $cm^{-1}$.

In the present invention, the peak intensity ratio between G band and D band (peak intensity of G band/peak intensity of D band) of 1.2 or more allows the formed black particles to have high denseness and an excellent effect of suppressing interparticle sintering at high temperatures.

When the peak intensity ratio is less than 1.2, the black particles not only have insufficient denseness and an insufficient effect of suppressing sintering at high temperatures, but also have lower particle strength.

The peak intensity ratio is more preferably 1.7 or more and more preferably 10 or less.

The black particles of the present invention may contain an element other than carbon. Examples of the element other than carbon include nitrogen, hydrogen, and oxygen. The amount of such an element is preferably 10 atom% or less relative to the total of carbon and the element other than carbon.

The black particles of the present invention may also contain a resin component.

The amorphous carbon constituting the black particles of the present invention is derived from carbon contained in an oxazine resin. Use of the oxazine resin enables cost reduction because it can be carbonized at low temperatures.

The oxazine resin, which is commonly classified as a phenol resin, is a thermosetting resin obtainable by reacting a phenol and formaldehyde together with an amine. When the phenol is one containing an amino group attached to the phenol ring, such as para-aminophenol, no amine needs to be added in the reaction, and the resulting resin in such a case tends to be easily carbonized. Use of a naphthalene ring instead of a benzene ring further facilitates carbonization.

Examples of the oxazine resin include a benzoxazine resin and a naphthoxazine resin. Suitable among these resins is a naphthoxazine resin because it is easily carbonized at the lowest temperatures. Partial structures of oxazine resins are shown below. A partial structure of a benzoxazine resin is shown in Formula (1) and that of a naphotoxazine resin is shown in Formula (2).

As shown in the formulae, oxazine resins refer to resins containing a 6-membered ring attached to a benzene or naphthalene ring. The 6-membered ring contains oxygen and nitrogen, which is the origin of the name.

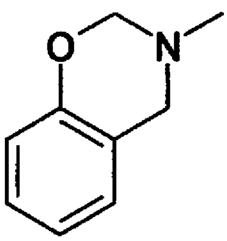
··· (1)

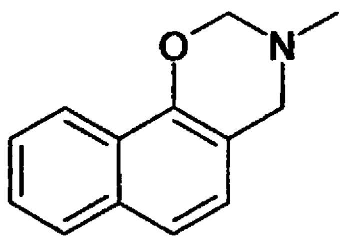
··· (2)

The use of an oxazine resin enables the formation of the black particles at a much lower temperature than is possible with other resins such as epoxy resins. Specifically, oxazine resins can be carbonized at 200°C or lower. In particular, a naphthoxazine resin can be carbonized at a lower temperature.

By such carbonization at a lower temperature using an oxazine resin, black particles containing amorphous carbon can be formed in an appropriate solvent.

Why the black particles containing amorphous carbon can be formed by such a method is unclear; however, it is presumably because, for example, when a naphthalene oxazine resin is used as an oxazine resin, the naphthalene structures in the resin are locally joined by low-temperature heating, and thus form a layer structure on the molecular level. Since high-temperature treatment is not performed, the layer structure does not develop into a long-range periodic structure as graphite, and thus does not exhibit crystallinity.

Whether the obtained carbon has a graphite structure or an amorphous structure can be determined by whether a peak is detected at a position where 2θ is 26.4° by an X-ray diffraction method described later.

The raw materials for the naphthoxazine resin include dihydroxynaphthalene that is a phenol, triazine, formaldehyde, and amines. These raw materials are described later.

The amorphous carbon is preferably obtained by heat treatment of the oxazine resin at 40°C to 350°C. In the present invention, the use of a naphthoxazine resin, which can be carbonized at low temperatures, enables production of the amorphous carbon at a relatively low temperature.

In analysis of an image using an image analyzer, the average sphericity can be calculated by averaging the sphericities of arbitrarily selected 100 particles in an electron micrograph.

Such production at low temperatures offers advantages such as lower cost and a simpler process than before.

The heat treatment temperature is preferably 50°C to 300°C.

The black particles of the present invention have a zeta potential (surface potential) of -70 to +80 mV.

When the zeta potential is within the above range, the black particles having excellent uniformity of the particle size and favorable dispersibility in a solvent can be obtained.

The lower limit of the zeta potential is preferably - 60 mV and the upper limit thereof is preferably +70 mV.

In determination of the zeta potential with a micro-electrophoresis zeta potential analyzer, a solution containing black particles dispersed therein is injected into a measurement cell, and a voltage is applied thereto under observation using a microscope, followed by measurement of the potential at which the particles stop moving (become still).

The black particles of the present invention have an average total light reflectance measured at a wavelength of 400 to 800 nm of 5% or less. The average total light reflectance within the above range allows the black particles to exhibit high blackness in a visible light region because most of visible light is absorbed by the black particles. The upper limit of the average total light reflectance is preferably 4.5%.

When the total light reflectance of the black particles of the present invention is measured at a wavelength of 400 to 800 nm, it is preferable that no peak indicating the maximum value of the total light reflectance is detected.

The total light reflectance can be measured with a spectrophotometer equipped with an integrating sphere.

The lower limit of the average particle size of the black particles of the present invention is preferably 0.005 μm and the upper limit thereof is preferably 50 μm. The average particle size within the range of 0.005 μm to 50 μm enables achievement of sufficient blackness and high dispersibility. The lower limit is more preferably 0.01 μm and the upper limit is more preferably 40 μm.

The coefficient of variation (CV value) of the particle size of the black particles of the present invention is preferably 20% or less. When the CV value of the particle size is 20% or less, the monodispersibility of the black particles is improved to facilitate the closest packing of the particles used as a black pigment. As a result, the shielding effect against visible light can be enhanced. The upper limit of the CV value of the particle size is more preferably 15%. The lower limit thereof is not particularly limited and is preferably 0.5%.

The CV value (%) of the particle size is the value obtained by dividing the standard deviation by the average particle size, expressed in percentage. The value can be obtained by the equation below. A smaller CV value indicates a smaller variation in the particle size.

$$\text{CV value (\%) of particle size} = (\text{standard deviation of particle size}/\text{average particle size}) \times 100$$

The average particle size and the standard deviation can be measured with a FE-TEM, for example.

The black particles of the present invention preferably have an average sphericity of 90% or more.

With such an average sphericity, the effects of the present invention can be enhanced. The lower limit of the average sphericity is more preferably 95%.

The sphericity (minor axis/major axis) can be measured by analyzing an electron micrograph photographed with an FE-TEM or FE-SEM, using an image analyzer. The average sphericity can be calculated by obtaining the average of the sphericities of arbitrarily selected 100 particles in the electron micrograph.

The black particles of the present invention have a specific gravity of 1.8 $g/cm^3$ or less. With the specific gravity of 1.8 $g/cm^3$ or less, the black particles can achieve high dispersibility. The lower limit of the specific gravity is preferably 1.20 $g/cm^3$ and the upper limit thereof is preferably 1.70 $g/cm^3$.

The black particles of the present invention preferably have a volume resistivity of $1.0 \times 10^7$ Ω·cm or more. The volume resistivity of $1.0 \times 10^7$ Ω·cm or more ensures high insulation properties. The volume resistivity is more preferably $1.0 \times 10^8$ Ω·cm or more, still more preferably $1.0 \times 10^{11}$ Ω·cm or more. The upper limit thereof is preferably $1.0 \times 10^{18}$ Ω·cm.

In analysis of the black particles of the present invention by time-of-flight secondary ion mass spectrometry (TOF-SIMS), at least one of a mass spectrum derived from a benzene ring and a mass spectrum derived from a naphthalene ring is preferably detected.

When at least one of such a mass spectrum derived from a benzene ring and a mass spectrum derived from

a naphthalene ring is detected, the black particles can be confirmed to be derived from carbon contained in an oxazine resin, and at the same time, the particles can have high denseness.

The "mass spectrum derived from a benzene ring" as used herein refers to a mass spectrum around 77.12. The "mass spectrum derived from a naphthalene ring" as used herein refers to a mass spectrum around 127.27.

The above analysis can be performed with a TOF-SIMS instrument (available from ION-TOF), for example.

In the analysis of the black particles of the present invention by an X-ray diffraction method, no peak is preferably detected at a position where 2θ is 26.4°.

The peak at the position where 2θ is 26.4° is a peak of graphite crystal. When no peak is detected at this position, the carbon constituting the black particles can be confirmed to have an amorphous structure.

The above analysis can be performed with an X-ray diffractometer (SmartLab Multipurpose, available from Rigaku Corporation), for example.

The black particles of the present invention can be produced by a method including a step of reacting a mixed solution containing triazine, dihydroxynaphthalene, and a solvent or a method including a step of reacting a mixed solution containing formaldehyde, an aliphatic amine, dihydroxynaphthalene, and a solvent.

In the method of producing the black particles of the present invention, a mixed solution such as a mixed solution containing triazine, dihydroxynaphthalene, and a solvent or a mixed solution containing formaldehyde, an aliphatic amine, dihydroxynaphthalene, and a solvent is prepared.

Since formaldehyde is unstable, formalin, a formaldehyde solution, is preferably used. Formalin usually contains a small amount of methanol as a stabilizer in addition to formaldehyde and water. The formaldehyde used in the present invention may be in the form of formalin as long as the formaldehyde content therein is clear.

Paraformaldehyde, which is a polymerized form of formaldehyde, is also usable as a raw material. However, paraformaldehyde has lower reactivity, and thus formalin mentioned above is preferred.

The aliphatic amine is represented by the formula $R\text{-}NH_2$ where R is preferably an alkyl group containing five or less carbon atoms. Examples of the alkyl group containing five or less carbon atoms include, but not limited to, methyl, ethyl, n-propyl, isopropyl, cyclopropyl, n-butyl, isobutyl, s-butyl, t-butyl, cyclobutyl, cyclopropylmethyl, n-pentyl, cyclopentyl, cyclopropylethyl, and cyclobutylmethyl groups.

The substituent R is preferably a methyl, ethyl, propyl, or like group because the molecular weight of the aliphatic amine is preferably small. Preferred actual compounds include methylamine, ethylamine, and propylamine. Most preferred is methylamine, which has the smallest molecular weight.

The dihydroxynaphthalene has many isomers. Examples thereof include 1,3-dihydroxynaphthalene, 1,5-dihydroxynaphthalene, 1,6-dihydroxynaphthalene, 1,7-dihydroxynaphthalene, 2,3-dihydroxynaphthalene, 2,6-dihydroxynaphthalene, and 2,7-dihydroxynaphthalene.

Among these isomers, 1,5-dihydroxynaphthalene and 2,6-dihydroxynaphthalene are preferred because of their high reactivity, in particular, 1,5-dihydroxynaphthalene, which has the highest reactivity, is preferred.

In the case of employing a method where the triazine is not added and formaldehyde and an aliphatic amine which are raw material of triazine are added, regarding the ratio between the three components in the mixed solution, namely dihydroxynaphthalene, an aliphatic amine, and formaldehyde, it is most preferred that the amount of the aliphatic amine is 1 mol and the amount of formaldehyde is 2 mol relative to 1 mol of dihydroxynaphthalene.

The optimal mixing ratio is not always exactly the above ratio because under some reaction conditions, raw materials may be lost by, for example, volatilization during reaction; however, preferably the amount of the aliphatic amine is within the range of 0.8 to 1.2 mol and the amount of formaldehyde is within the range of 1.6 to 2.4 mol relative to 1 mol of dihydroxynaphthalene.

When the amount of the aliphatic amine is 0.8 mol or more, an oxazine ring can sufficiently be formed and thus the polymerization suitably proceeds. When the amount of the aliphatic amine is 1.2 mol or less, formaldehyde required for the reaction is not consumed too much, and thus the reaction smoothly proceeds to provide desired naphthoxazine. Similarly, when the amount of the formaldehyde is 1.6 mol or more, an oxazine ring can sufficiently be formed, and thus the polymerization suitably proceeds. When the amount of the formaldehyde is 2.4 mol or less, side reactions can advantageously be reduced.

The mixed solution contains a solvent for dissolution and reaction of the two or three raw materials.

Examples of the solvent include alcohols such as methanol, ethanol, and isopropanol, ketones such as acetone and methyl ethyl ketone, tetrahydrofuran, dioxane, chloroform, ethyl acetate, dimethylformamide, and dimethyl sulfoxide.

The solvent may consists of a single component or may be a mixed solvent containing two or more solvents. The solvent used preferably has a solubility parameter (SP value) of 9.0 or more.

Examples of the solvent having a SP value of 9.0 or more include ethanol (12.7), methanol (14.7), isopropanol (11.5), cresol (13.3), ethylene glycol (14.2), phenol (14.5), water (23.4), N,N-dimethylformamide (DMF, 12.3), dimethyl sulfoxide (DMSO, 13.0), methyl ethyl ketone (9.3), dioxane (10.3), ethyl acetate (9.0), chloroform (9.4), and acetone (10.0).

The solvent having a SP value of 9.0 or more is more preferably a solvent having a SP value of 9.0 to 15.0. In the case where the solvent used consists of a single component, the boiling point is preferably 50°C to 150°C. The mixed

solution more preferably contains a solvent having a boiling point of 50°C to 130°C and a SP value of 9.0 or more.

In the case where the solvent is a mixed solvent containing two or more solvents, preferably, the mixed solvent contains a solvent having a boiling point of 150°C or higher and the amount of the solvent having a boiling point of 150°C or higher is 60 vol% or less. In such a case, the black particles having a high average sphericity can be obtained.

The lower limit of the amount of the solvent having a boiling point of 150°C or lower is more preferably 45 vol%.

The amount of the solvent in the mixed solution is not particularly limited, and is usually preferably 300 to 200,000 parts by mass based on 100 parts by mass of raw materials (solutes) including dihydroxynaphthalene, triazine, an aliphatic amine, and formaldehyde (corresponding to molar concentration of the solutes of 1.0 to 0.001 M). When the amount is 300 parts by mass or more, the solubility of the solutes is enhanced. When the amount is 200,000 parts by mass or less, the concentration is appropriate to promote progress of the reaction.

The method of producing the black particles of the present invention includes the step of reacting the mixed solution. Progress of the reaction leads to formation of a polynaphthoxazine resin, and then, black particles containing amorphous carbon can be produced.

In the reaction, continuous heating opens the formed oxazine ring and polymerization is initiated, which increases the molecular weight to form a so-called polynaphthoxazine resin.

For production of uniform particles, the particles are preferably in a dispersed state at the time of the reaction. The particles can be dispersed by a known method, such as stirring, sonication, or rotation. An appropriate dispersant can be added so as to improve the dispersion state.

In the method for producing the black particles of the present invention, the heating temperature at the time of reaction is preferably 50°C to 350°C. With such a heating temperature, after polymerization of a polynaphthoxazine resin, the polynaphthoxazine resin is carbonized to produce black particles containing amorphous carbon. Since a naphthoxazine resin, which can be carbonized at low temperatures, is used in the present invention, the amorphous carbon can be obtained at a lower temperature.

The heating treatment may be performed in the air or in an inert gas such as nitrogen or argon. In the case where the heat treatment temperature is 200°C or higher, an inert gas atmosphere is more preferred.

In the case where the heating temperature is 100°C or higher, the reaction is preferably carried out in a pressurized container.

The step of reacting the mixed solution may be carried out in one stage or in two stages.

A method of carrying out the above step in two stages preferably includes the step of forming polyoxazine resin particles by reacting the mixed solution and carbonizing the formed polyoxazine resin particles by heat treatment at a predetermined temperature.

In the step of forming polyoxazine resin particles, the reaction gradually proceeds even at room temperature. For efficient progress of the reaction, the temperature is preferably 50°C to 150°C. The reaction time can be adjusted according to the temperature, and is commonly preferably 30 minutes to 20 hours. The reaction under the above conditions provides spherical polyoxazine resin particles. The polyoxazine resin particles obtained in this step are green, brown, or black depending on the respective reaction conditions.

The particle size of the polyoxazine resin particles can be adjusted by parameters such as the concentration of the solution, reaction temperature, molar ratio of raw materials, and stirring conditions.

In the step of carbonizing the formed polyoxazine resin particles by heat treatment at a predetermined temperature, the heating temperature is preferably 100°C to 350°C. The heat treatment time is not particularly limited. In terms of the completeness of the carbonization and the economic standpoint, the heat treatment time is preferably 1 to 30 hours. As a result of the heat treatment, the polynaphthoxazine resin is carbonized to provide black particles containing amorphous carbon. Carbonization of normal resins requires high temperatures. In contrast, since an oxazine resin, which can be carbonized at low temperatures, is used in the present invention, the resin can be formed into amorphous carbon even at such a low temperature as 150°C.

The heat treatment may be performed in the air or in an inert gas such as nitrogen or argon. In the case where the heat treatment temperature is 200°C or higher, an inert gas atmosphere is more preferred.

The production method may further include, after the above reaction step, a drying step of drying off the solvent by hot air or vacuum drying. The heat-drying method is not particularly limited.

In addition, after the drying step, a step of post treatment by heating is preferably carried out. The heating temperature in the post treatment step is preferably 100°C to 350°C and the heating time is preferably 30 minutes to 30 hours.

The black particles of the present invention can be used for applications such as black pigments, filler, weather resistance improvers, and display elements of electronic paper or the like.

- Advantageous Effects of Invention

The present invention can provide black particles having high electrical insulation properties, high blackness

in a visible light region, and excellent dispersibility, and a method for producing the black particles.

BRIEF DESCRIPTION OF DRAWINGS

Fig. 1 is a FE-SEM image of particles obtained in Example 1.
Fig. 2 is a FE-SEM image of particles obtained in Example 2.
Fig. 3 is a FE-SEM image of particles obtained in Comparative Example 1.
Fig. 4 is a FE-SEM image of particles obtained in Comparative Example 2.

DESCRIPTION OF EMBODIMENTS

Embodiments of the present invention are more specifically described in the following with reference to, but not limited to, examples.

(Example 1)

An amount of 1.20 g of 1,5-dihydroxynaphthalene (1,5-DHN, Tokyo Chemical Industry Co., Ltd.) and 0.98 g of 1,3,5-triazine (Tokyo Chemical Industry Co., Ltd.) were sequentially dissolved in 50 ml of ethanol to prepare a mixed ethanol solution.

The obtained mixed solution was then stirred (rotation frequency: 300 rpm) under heating at 80°C for one hour. The solution was filtered through a glass filter, and the obtained particles were washed with ethanol three times and vacuum-dried at 50°C for three hours, followed by heating at 110°C for two hours. Thus, black carbon particles were obtained.

The mixed solution after heating at 80°C for one hour was subjected to nuclear magnetic resonance spectroscopy (NMR spectroscopy). A peak (3.95 ppm) corresponding to the methylene group of "benzene ring-$CH_2$-N" and a peak (4.92 ppm) corresponding to the methylene group of "O-$CH_2$-N" of a naphthoxazine ring were detected at almost the same intensity. This confirmed that a resin component containing a naphthoxazine ring was generated.

The nuclear magnetic resonance spectroscopy was performed with $^1$H-NMR (600 MHz) available from Varian Inova using deuterated dimethyl sulfoxide. The number of spectral accumulations was 256, and the relaxation time was 10 seconds.

The obtained carbon particles were analyzed by Raman spectroscopy using Almega XR (Thermo Fisher Scientific K.K.). Peaks were observed at both G band and D band, indicating that the naphthoxazine resin was converted into amorphous carbon.

The peak intensity ratio between G band and D band was 1.8. The laser light had a wavelength of 530 nm.

(Example 2)

Black carbon particles were obtained in the same manner as in Example 1, except that 35 ml of ethanol and 15 ml of N,N-dimethylformamide (DMF) were used instead of 50 ml of ethanol in Example 1 and the stirring under heating was performed at 80°C for six hours. The heating temperature after drying was 200°C.

(Example 3)

Black carbon particles were obtained in the same manner as in Example 1, except that 20 ml of ethanol and 30 ml of N,N-dimethylformamide (DMF) were used instead of 50 ml of ethanol in Example 1 and the stirring under heating was performed at 80°C for six hours. The heating temperature after drying was 350°C.

(Example 4)

An amount of 0.012 g of 1,5-dihydroxynaphthalene (Tokyo Chemical Industry Co., Ltd.), 0.006 g of 40% methylamine (Wako Pure Chemical Industries, Ltd.), and 0.012 g of a 37% formaldehyde aqueous solution (Wako Pure Chemical Industries, Ltd.) were sequentially dissolved in 50 ml of ethanol to prepare a mixed ethanol solution.

The obtained mixed solution was treated in an ultrasonic bath at 50°C for two hours (ultrasonic frequency: Hz). The solution was then filtered through a glass filter, and the obtained particles were washed with ethanol three times. The recovered particles were vacuum-dried at 50°C for three hours and then subjected to heat treatment at 110°C for two hours. Thus, black carbon particles were obtained.

(Comparative Example 1)

Carbon particles were obtained in the same manner as in Example 1, except that 50 ml of DMF was used instead of 50 ml of ethanol in Example 1 and the stirring under heating was performed at 80°C for six hours. The heating temperature after drying was 110°C.

(Comparative Example 2)

Carbon particles were obtained in the same manner as in Example 1, except that 15 ml of ethanol and 35 ml of DMF were used instead of 50 ml of ethanol in Example 1 and the stirring under heating was performed at 80°C for six hours. The heating temperature after drying was 150°C.

(Comparative Example 3)

To 100 g of pure water was added 12.3 g of a formaldehyde solution (37% by weight). Then, to the mixture was added 9 g of resorcinol (m-dihydroxybenzene) under stirring. To the solution was further added 0.45 g of sodium carbonate, and the mixture was allowed to react at 50°C for five hours. The obtained product was subjected to filtering and washing, and then dried in vacuum in a vacuum dryer at 110°C, thereby obtaining carbon particles.

(Comparative Example 4)

Acetylene black particles (Li-400 available from DENKA) having an average particle size of about 48 nm were used.

(Evaluation method)

(1) Average particle size, CV value, average sphericity

FE-SEM images of the particles obtained in the examples and comparative examples were analyzed using image analysis software (WINROOF available from Mitani Corporation), thereby determining the average particle size of each.

The standard deviation was calculated, and the coefficient of variation (CV value) of the particle size was calculated based on the obtained value.

The sphericity was determined based on the ratio between the smallest diameter and the largest diameter of the particle, and the average sphericity was calculated.

Figs. 1 to 4 show FE-SEM images of Examples 1 and 2 and Comparative Examples 1 and 2. As shown in Figs. 3 and 4, spherical particles were not obtained in Comparative Examples 1 and 2. Accordingly, Evaluations (1) to (5) and (8) were not performed.

(2) Specific gravity

The specific gravity of the particles obtained in each of the examples and comparative examples was measured using a dry automatic pycnometer (Accupyc II134 available from Shimadzu Corporation) (sample amount: 0.2 g).

(3) Volume resistivity

The volume resistivity of the particles obtained in each of the examples and comparative examples was determined by measuring the volume resistance value of the particles at a load of 15 N using a powder resistivity measurement system (Mitsubishi Chemical Analytech Co., Ltd.).

(4) Total light reflectance

The reflection spectrum in the whole visible light region from 400 to 800 nm of the particles obtained in each of the examples and comparative examples was measured using a spectrophotometer equipped with an integrating sphere (U-4100 type available from Hitachi, Ltd.), and the average of the reflectance of each was determined.

(5) Dispersibility

The dispersibility of the particles obtained in each of the examples and comparative examples was evaluated using a centrifugal sedimentation and light transmissive type dispersion stability analyzer (LUMiSizer 612 available from L.U.M GmbH). Specifically, the particles were dispersed in a 5% aqueous solution of polyvinylalcohol (PVA) at a proportion of 5% by weight, and about 1 ml of the obtained composition was put in a glass cell for analysis. The supernatant was irradiated with light, and the integral value of the variation in the amount of the transmitted light per hour was obtained. The dispersibility was evaluated based on the following criteria.

Variation in the amount of light after one hour was 5% or less: ○ (Good)
Variation in the amount of light after one hour was more than 5%: × (Poor)

(6) TOF-SIMS analysis

For the obtained particles, whether a mass spectrum (around 77.12) derived from a benzene ring and a mass spectrum (around 127.27) derived from a naphthalene ring were present was determined by time-of-flight secondary ion mass spectrometry (TOF-SIMS) with TOF-SIMS 5 (available from ION-TOF). The TOF-SIMS was performed under the conditions below. In order to minimize contamination due to the air or the storage casing, the sample prepared was stored in a clean casing for silicon wafer storage.

<Measurement conditions>

Primary ion: 209Bi+1
Ion voltage: 25 kV
Ion current: 1 pA
Mass range: 1 to 300 mass
Analysis area: 500 × 500 μm
Charge-up prevention: electron irradiation neutralization Random raster scan

(7) X-ray diffraction

Analysis was performed using an X-ray diffractometer (SmartLab Multipurpose available from Rigaku Corporation) under the following conditions.

<Analysis conditions>

X-ray wavelength: CuKα 1.54A, Analysis range: 2θ = 10° to 70°, Scanning rate: 4°/min, Step: 0.02°

For the obtained diffraction data, whether a peak was detected at a position of 2θ = 26.4° was checked.

(8) Zeta potential

The zeta potential of the particles was measured using a micro-electrophoresis zeta potential analyzer (MODEL 502 available from Nihon Rufuto Co., Ltd.). Specifically, a KCl aqueous solution (concentration: 0.01 M) was used as a support electrolyte, and the KCl solution containing a small amount of black particles dispersed therein was injected into a measurement cell. A voltage was applied thereto under observation using a microscope and adjusted until the particles stopped moving (became still). The potential at that time was taken as the zeta potential.

[Table 1]

| | Production step | | | | | | Carbon particles | | | | | Evaluation | | | | | | | |
|---|---|---|---|---|---|---|---|---|---|---|---|---|---|---|---|---|---|---|---|
| | Concentration of 1,5-DHN (mol/L) | Reaction temperature (°C) | Reaction time (h) | Solvent (vol%) | | Heating temperature after (drying (°C) | Material | Peak intensity ratio | TOF-SIMS measurement | | X-ray diffraction | Average particle size (μm) | CV value of particle size (%) | Average sphericity (%) | Specific gravity (g/cm³) | Volume resistivity (Ω·cm) | Dispersibility | Zeta potential (mV) | Total light reflectance (%) |
| | | | | Ethanol | DMF | | | | Benzene ring | Naphthalene ring | | | | | | | | | |
| Example 1 | 0.15 | 80 | 1 | 100 | 0 | 110 | Amorphous carbon | 1.8 | Present | Present | Not detected | 2.1 | 5 | 98.0 | 1.53 | >$10^7$ | ○ | 16 | 4.5 |
| Example 2 | 0.15 | 80 | 6 | 70 | 30 | 200 | Amorphous carbon | 1.5 | Present | Present | Not detected | 0.61 | 7 | 95.0 | 1.45 | >$10^7$ | ○ | -44 | 4.0 |
| Example 3 | 0.15 | 80 | 6 | 40 | 60 | 350 | Amorphous carbon | 1.3 | Present | Present | Not detected | 0.20 | 10 | 92.0 | 1.34 | >$10^7$ | ○ | -58 | 3.2 |
| Example 4 | 0.0015 | 50 (Ultrasonic wave) | 2 | 100 | 0 | 110 | Amorphous carbon | 1.4 | Present | Present | Not detected | 0.007 | 14 | 92.0 | 1.30 | >$10^7$ | ○ | 78 | 2.5 |
| Comparative Example 1 | 0.15 | 80 | 6 | 0 | 100 | 110 | Amorphous carbon | 1.1 | Present | Present | Not detected | No spherical particles obtained | - | - | - | - | - | - | - |
| Comparative Example 2 | 0.15 | 80 | 6 | 30 | 70 | 150 | Amorphous carbon | 1.0 | Present | Present | Not detected | No spherical particles obtained | - | - | - | - | - | - | - |
| Comparative Example 3 | Produced by conventional method | | | | | | Amorphous carbon | 0.8 | Present | Absent | Not detected | 3.5 | 30 | 89 | 1.8 | >$10^7$ | × | -9 | 10 |

(continued)

| | Production step | | | | | | Carbon particles | | | | | Evaluation | | | | | | | |
|---|---|---|---|---|---|---|---|---|---|---|---|---|---|---|---|---|---|---|---|
| | Concentration of 1,5-DHN (mol/L) | Reaction temperature (°C) | Reaction time (h) | Solvent (vol%) | | Heating temperature after (drying (°C) | Material | Peak intensity ratio | TOF-SIMS measurement | | X-ray diffraction | Average particle size (μm) | CV value of particle size (%) | Average sphericity (%) | Specific gravity (g/cm$^3$) | Volume resistivity (Ω·cm) | Dispersibility | Zeta potential (mV) | Total light reflectance (%) |
| | | | | Ethanol | DMF | | | | Benzene ring | Naphthalene ring | | | | | | | | | |
| Comparative Example 4 | Acetylene black particles | | | | | | Amorphous carbon | 0.85 | - | - | Not detected | 0.048 | 25 | 85 | 1.9 | 0.2 | × | -19.7 | 1.5 |

INDUSTRIAL APPLICABILITY

The present invention can provide black particles having high electrical insulation properties, high blackness in a visible light region, and excellent dispersibility, and a method for producing the black particles.

## Claims

1. Black particles comprising amorphous carbon,
the amorphous carbon being derived from carbon contained in an oxazine resin,
the black particles having

   a specific gravity of 1.8 g/$cm^3$ or less,
   a zeta potential of -70 to +80 mV,
   an average total light reflectance measured at a wavelength of 400 to 800 nm of 5% or less, and
   a peak intensity ratio between G band and D band as determined from a Raman spectrum of 1.2 or more.

2. The black particles according to claim 1,
wherein the black particles have an average particle size of 0.005 to 50 $\mu$m, an average sphericity of 90% or more, and a coefficient of variation (CV value) of 20% or less.

3. The black particles according to claim 1 or 2,
wherein the black particles have a volume resistivity of $1.0 \times 10^7$ $\Omega \cdot$cm or more.

4. The black particles according to claim 1, 2, or 3,
wherein the average total light reflectance measured at a wavelength of 400 to 800 nm is 4.5% or less.

5. The black particles according to claim 1, 2, 3, or 4,
wherein at least one of a mass spectrum derived from a benzene ring and a mass spectrum derived from a naphthalene ring is detected in analysis of a coating layer by time-of-flight secondary ion mass spectrometry (TOF-SIMS).

6. The black particles according to claim 1, 2, 3, 4, or 5,
wherein no peak is detected at a position where $2\theta$ is 26.4° in analysis of a coating layer by an X-ray diffraction method.

7. A method for producing the black particles according to claim 1, 2, 3, 4, 5, or 6, comprising the step of
reacting a mixed solution containing triazine, dihydroxynaphthalene, and a solvent.

8. A method for producing the black particles according to claim 1, 2, 3, 4, 5, or 6, comprising the step of
reacting a mixed solution containing formaldehyde, an aliphatic amine, dihydroxynaphthalene, and a solvent.

9. The method for producing the black particles according to claim 7 or 8,
wherein the solvent consists of a single component and has a solubility parameter (SP value) of 9.0 or more and a boiling point of 150°C or lower.

10. The method for producing the black particles according to claim 7 or 8,
wherein the solvent is a mixed solvent comprising two or more solvents, the mixed solvent contains a solvent having a boiling point of 150°C or higher, and the amount of the solvent having a boiling point of 150°C or higher is 60 vol% or less.

FIG.1

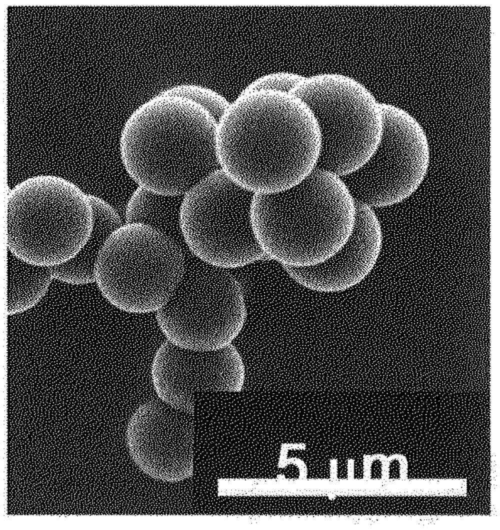


FIG.2

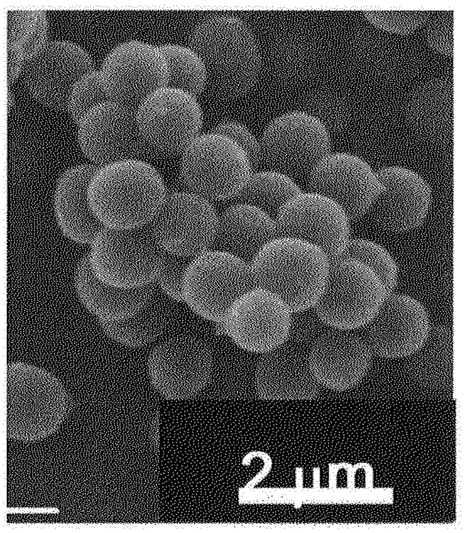


FIG.3

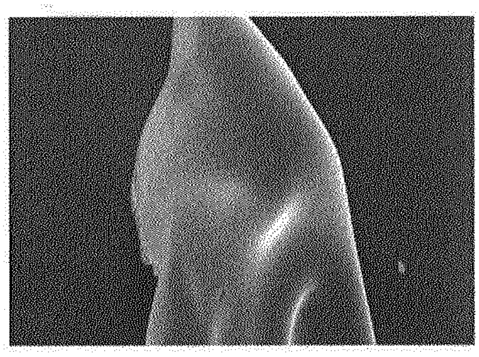

FIG.4

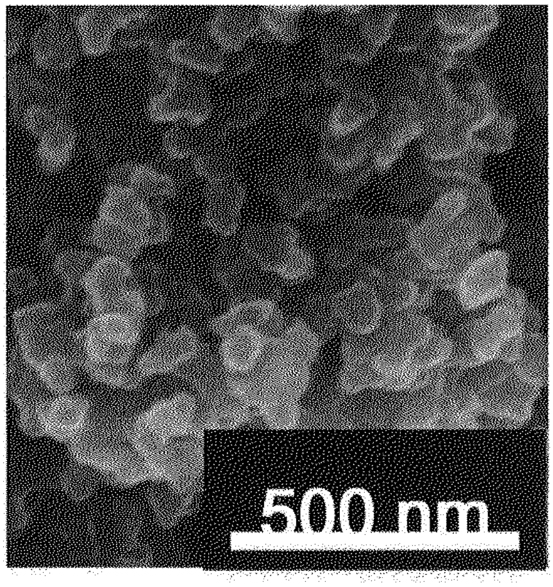

## INTERNATIONAL SEARCH REPORT

International application No.
PCT/JP2017/005999

A. CLASSIFICATION OF SUBJECT MATTER
*C09C1/44*(2006.01)i, *C01B32/05*(2017.01)i

According to International Patent Classification (IPC) or to both national classification and IPC

B. FIELDS SEARCHED

Minimum documentation searched (classification system followed by classification symbols)
C09C1/44, C01B32/05

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2011-068829 A (Sekisui Chemical Co., Ltd.), 07 April 2011 (07.04.2011), claims; paragraphs [0002], [0039] to [0041] (Family: none) | 1,3-5,8 |
| A | JP 2014-162116 A (Sekisui Chemical Co., Ltd.), 08 September 2014 (08.09.2014), claims; paragraphs [0037] to [0050]; examples (Family: none) | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 March 2017 (24.03.17) | 04 April 2017 (04.04.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/005999

C (Continuation). DOCUMENTS CONSIDERED TO BE RELEVANT

| Category* | Citation of document, with indication, where appropriate, of the relevant passages | Relevant to claim No. |
|---|---|---|
| A | WO 2013/027674 A1 (Sekisui Chemical Co., Ltd.), 28 February 2013 (28.02.2013), claims; paragraphs [0006], [0013] to [0025]; examples; fig. 1 & US 2014/0194018 A1 claims; paragraphs [0007] to [0008], [0027] to [0050]; examples; fig. 1 & EP 2746337 A1 | 1-10 |
| A | WO 2007/129640 A1 (Sekisui Chemical Co., Ltd.), 15 November 2007 (15.11.2007), claims; examples & US 2009/0318658 A1 claims; examples & CN 101437895 A & KR 10-2009-0005130 A & TW 200801077 A & JP 4378424 B2 | 1-10 |
| A | JP 2015-093883 A (Sekisui Chemical Co., Ltd.), 18 May 2015 (18.05.2015), claims; paragraphs [0006], [0034] to [0049]; examples (Family: none) | 1-10 |
| A | JP 11-097011 A (Unitika Ltd.), 09 April 1999 (09.04.1999), claims; paragraphs [0004] to [0013]; examples (Family: none) | 1-10 |
| A | JP 6-505693 A (Edison Polymer Innovation Corp.), 30 June 1994 (30.06.1994), entire text & US 5152939 A entire text & WO 1992/016470 A1 & EP 646102 A1 & DE 69220385 C & CA 2104122 A1 | 1-10 |
| A | JP 2004-285195 A (Lignyte Co., Ltd.), 14 October 2004 (14.10.2004), entire text (Family: none) | 1-10 |
| P,A | WO 2016/047606 A1 (Sekisui Chemical Co., Ltd.), 31 March 2016 (31.03.2016), entire text & JP 5926868 B1 | 1-10 |
| P,A | JP 2016-097654 A (Sekisui Chemical Co., Ltd.), 30 May 2016 (30.05.2016), entire text (Family: none) | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3543501 B
- JP 4338479 B